# EUROPEAN PATENT APPLICATION

(11) **EP 2 871 504 A1**
(43) Date of publication of application: **13.05.2015**
(21) Application number: 14003719.3
(22) Date of filing: 05.11.2014
(51) Int. Cl.: G02B 6/293, G02B 7/00, G02B 6/12

(54) **Optical mode steering for wavelength stabilization**

(30) Priority: 06.11.2013 US 201314073687
(71) Applicant: Aurrion, Inc., Goleta, CA 93117 (US)
(72) Inventor: Koch, Brian, San Carlos, CA 94070 (US); Roth, Jonathan Edgar, Santa Barbara, CA 93101 (US); Bauters, Jared, Santa Barbara, CA 93103 (US); Fish, Gregory Alan, Santa Barbara, CA 93111 (US)
(74) Representative: Samson & Partner Patentanwälte mbB

(57) **Abstract**

Embodiments of the invention describe wavelength stabilization of selective optical components (e.g., multiplexers, de-multiplexers) using optical mode steering. An additional waveguide structure (130) is coupled to a free propagation region (102) of the selective optical component. This additional waveguide structure (130) moves a spatial position or a direction of a propagation of an optical mode at the free propagation region (102) in order to adjust a wavelength response of the component. By moving the position or direction of the optical mode, the wavelength response of the component may be changed; in other words, by tuning the position or direction of the optical mode, a component's wavelength/channel response is "remapped" to account for the mis-targeting (i.e., wavelength shift) related to a temperature change or a design/manufacturing defect.

## Description

### FIELD

Embodiments of the invention generally pertain to optical devices and more specifically to selective optical devices such as multiplexers and de-multiplexers.

### BACKGROUND

Conventional semiconductor based optical multiplexers (and de-multiplexers) have a wavelength shift of their transmission spectrum (i.e., transmitted power versus wavelength or optical frequency) that occurs with temperature change. Depending on the index change of the waveguiding materials, the thermal coefficients of refractive index (dn/dT) of multiplexing materials and the wavelength precision required by the system, this wavelength shift limits the temperature range over which the multiplexer can be used. Thus, to operate conventional semiconductor based multiplexers in wavelength division multiplexed systems, the temperature of the structure must be controlled so that the ambient temperature does not induce a wavelength shift that is unacceptable based on the passband width of each channel in the system. This requires a significant amount of power that makes the system considerably less efficient.

### BRIEF DESCRIPTION OF THE DRAWINGS

The following description includes discussion of figures having illustrations given by way of example of implementations of embodiments of the invention. The drawings should be understood by way of example, and not by way of limitation. As used herein, references to one or more "embodiments" are to be understood as describing a particular feature, structure, or characteristic included in at least one implementation of the invention. Thus, phrases such as "in one embodiment" or "in an alternate embodiment" appearing herein describe various embodiments and implementations of the invention, and do not necessarily all refer to the same embodiment. However, they are also not necessarily mutually exclusive.
**FIG. 1** is a block diagram of a selective optical component according to an embodiment of the invention.
**FIG. 2** is an illustration of an optical de-multiplexer using optical mode steering to provide wavelength stabilization according to an embodiment of the invention.
**FIG. 3** is an illustration of an optical multiplexer using optical mode steering to provide wavelength stabilization according to an embodiment of the invention.
**FIG. 4** is an illustration of a plurality of optical mode steering components according to embodiments of the invention.
**FIG. 5** illustrates a tunable multi-wavelength optical transceiver including selective optical components having wavelength stabilization according to an embodiment of the invention.

Descriptions of certain details and implementations follow, including a description of the figures, which may depict some or all of the embodiments described below, as well as discussing other potential embodiments or implementations of the inventive concepts presented herein. An overview of embodiments of the invention is provided below, followed by a more detailed description with reference to the drawings.

### DESCRIPTION

Embodiments of the invention describe wavelength stabilization of selective optical components using optical mode steering. Throughout this specification, several terms of art are used. These terms are to take on their ordinary meaning in the art from which they come, unless specifically defined herein or the context of their use would clearly suggest otherwise. In the following description numerous specific details are set forth to provide a thorough understanding of the embodiments. One skilled in the relevant art will recognize, however, that the techniques described herein can be practiced without one or more of the specific details, or with other methods, components, materials, etc. In other instances, well-known structures, materials, or operations are not shown or described in detail to avoid obscuring certain aspects.

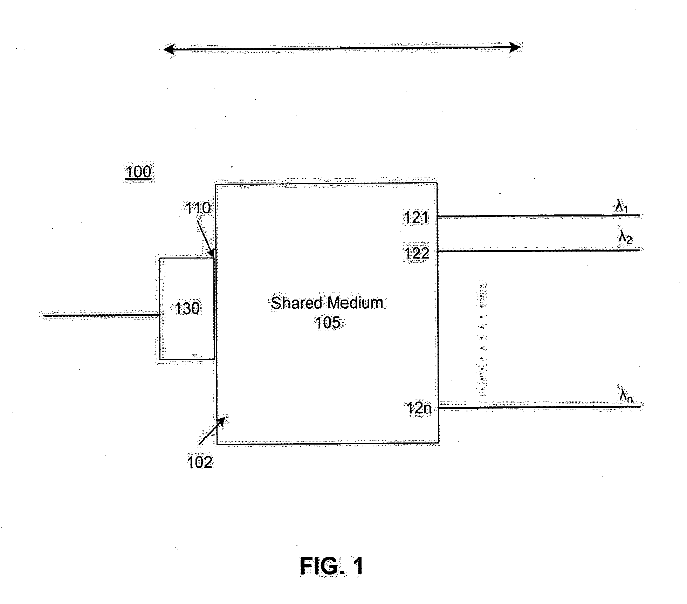

**FIG. 1** is a block diagram of a selective optical component according to an embodiment of the invention. In this embodiment, device 100 may comprise an optical multiplexer, an optical de-multiplexer, or bi-directional muxing device. FIG. 1 illustrates device 100 to include first port 110, second set of ports 121-12n, and shared medium 105 for the first port and the second set of ports to exchange light. Device 100 further includes free propagation region 102 at first port 110. In some embodiments, device 100 is designed to have multiple ports (e.g., in addition to port 110) for different polarizations or different sets of wavelengths (as described below); for polarization insensitive embodiments, the ratio of the array waveguides' group index and the effective index of the free propagation regions of the device (i.e., free propagation region 102 and/or the free propagation region at ports 121-12n (not shown)) may be the same (or as close as possible) for each polarization to achieve the same channel spacing for each polarization..

Describing device 100 as a de-muxing device, light traveling from left to right is received at port 110 and is output via one of ports 120-12n based on its wavelength. As shown in FIG. 1, light having wavelength value λ₁ is output via port 121, light having wavelength value λ₂ is output via port 122, and so on until light having wavelength value λₙ is output via port 12n. Describing device 100 as a muxing device, light traveling from right to left and having any of wavelength values λ₁-λₙ is received via ports 121-12n, and is output via port 110.

Semiconductor based optical de-muxing and muxing devices have a wavelength shift of their transmission spectrum (i.e., transmitted power versus wavelength or optical frequency) that occurs with temperature change. For example, when device 100 is operating as a de-multiplexer, light having a certain wavelength value may not be output at its designated port (e.g., light having wavelength value λ₂ may not be output via port 122). Current solutions for keeping these devices operational, such as in wavelength division multiplexed (WDM) systems, control the device's temperature to avoid this wavelength shift (i.e., if the ambient temperature induces a wavelength shift that is unacceptable based on the channel spacing in the system). This requires a significant amount of power that makes the device considerably less efficient.

In this embodiment, additional waveguide structure 130 is coupled to free propagation region 102 at port 110 to move a spatial position or a direction of a propagation of an optical mode at the free propagation region in order to adjust a wavelength response of device 100. By moving the position or direction of the optical mode of port 110, the wavelength response of device 100 may be changed; in other words, by tuning the position or direction of the optical mode, a device's wavelength/channel response is "remapped" to account for the mis-targeting (i.e., wavelength shift) related to a temperature change or a design/manufacturing defect. For example, for a de-muxing device, by moving the position of the input optical mode, the device can compensate for the wavelength shift as the temperature changes so that light having a certain wavelength value is always output at its designated (i.e., proper) port. Embodiments of the invention can thus be utilized by temperature insensitive devices, as additional structure 130 allows its wavelength response targeted (i.e., altered), if necessary, in a power efficient manner.

In some embodiments, additional structure 130 is actively controlled to compensate for the above described temperature shift. For example, additional waveguide structure 130 may be controlled by a feedback loop that senses a local temperature near device 100 for controlling (e.g., by heat or injected current) one or more sections of the additional structure in order to automatically compensate for the temperature dependent wavelength shift.

In other embodiments, additional structure 130 may have different cross sections to passively compensate for the above described temperature shift. For example, additional structure 130 may comprise a cladding or waveguiding material that has a negative index shift with temperature (i.e. a shift with an opposite sign of the waveguides of device 100) so that the net index of refraction of this structure has a negative shift with temperature. By using this in specific regions of the additional structure, it is possible to compensate for the temperature dependent wavelength shift without active control.

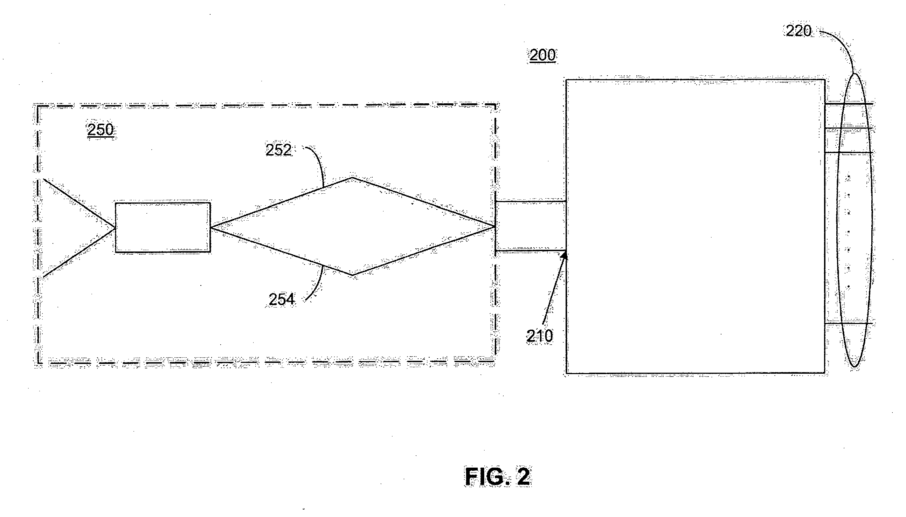

**FIG. 2** is an illustration of an optical de-multiplexer using optical mode steering to provide wavelength stabilization according to an embodiment of the invention. In this embodiment, de-multiplexer 200 comprises input port 210 and plurality of output ports 220. De-multiplexer 200 may comprise any de-multiplexing device known in the art, such as an arrayed waveguide grating (AWG).

As described above, embodiments of the invention move a spatial position or a direction of a propagation of an optical mode at a free propagation region of a device in order to adjust a wavelength response of the device. In this embodiment, the movement of the input optical mode for de-multiplexer 200 is achieved by placing Mach Zehnder interferometer (MZI) 250 before the de-multiplexer and placing the MZI's output coupler at the input of the de-multiplexer's free propagation region.

MZI 250 is shown to include branches/arms 252 and 254. By controlling the relative phase of the two branches of the MZI, the position of the optical mode at the input of the de-multiplexer's free propagation region may be changed. This translates to a wavelength shift in the transmission spectrum of the de-multiplexer at output ports 220. This embodiment therefore allows for compensation for wavelength mistargeting using a phase shift in the MZI arm(s). Thus it is possible to achieve temperature insensitive multiplexers that can also have their wavelengths controlled/targeted.

Furthermore, by choosing the appropriate waveguide cross sections for the MZI using the same principle for passive solutions described above, the MZI output may be spatially shifted as the temperature changes (which is the input to the multiplexer's free propagation region). This shift in input position may be designed to induce a shift in the wavelength response of the de-multiplexer that compensates the natural wavelength shift that has resulted from the same temperature change. Other embodiments may use different cross sections that have the same sign of index shift with temperature (dn/dT) but different values to achieve the same effect. By choosing the appropriate lengths of these sections with different cross sections for arms/branches 252 and 254, it is possible to achieve a net effect of no wavelength shift with temperature. Other embodiments may use a cladding material that has an index shift with temperature (dn/dT) that exactly cancels that of de-multiplexer 200.

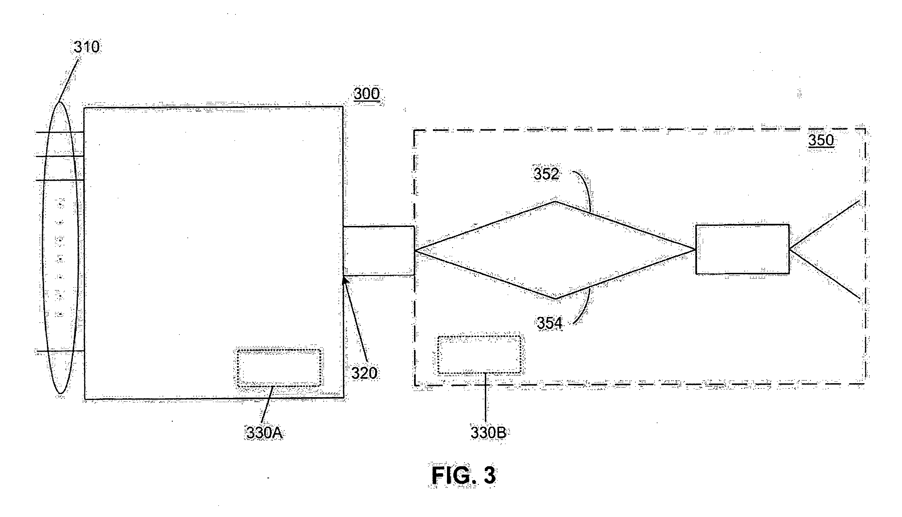

**FIG. 3** is an illustration of an optical multiplexer using optical mode steering to provide wavelength stabilization according to an embodiment of the invention. In this embodiment, multiplexer 300 comprises a plurality of input ports 310 and output port 320. Similar to the embodiment illustrated in FIG. 2, multiplexer 300 uses an MZI to move a spatial position or a direction of a propagation of an optical mode at a free propagation region of a device in order to adjust a wavelength response of the device.

MZI 350 is shown to include branches 352 and 354. By controlling the relative phase of the two branches of the MZI, the position of the optical mode at the output of the multiplexer's free propagation region can be changed. This translates to a wavelength shift in the transmission spectrum of the multiplexer at output port 320.

In this embodiment, the operating temperature of multiplexer 300 is measured via a temperature sensing element (e.g., a resistance temperature sensor); said temperature sensing element may also be used in other embodiments of the invention (e.g., the de-multiplexer illustrated in FIG. 2). The phase of branches 352 and 354 are controlled to adjust the wavelength response of multiplexer 300 to compensate for the inherent temperature dependent wavelength shift based on data from the temperature sensing element. As shown in FIG. 3, said temperature sensing element may be included in multiplexer 300 (shown as position 330A), or in MZI 350 (shown as position 330B).

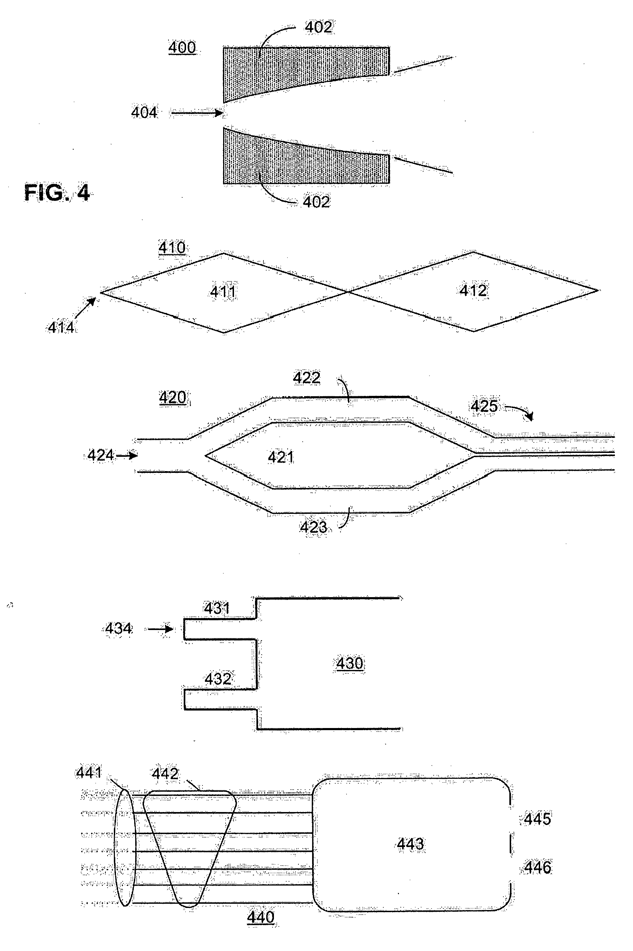

**FIG. 4** is an illustration of a plurality of optical mode steering components according embodiments of the invention. The structures illustrated in FIG. 4 may be coupled to a free propagation region of a selective optical device to move a spatial position or a direction of a propagation of an optical mode. It will be understood that the illustrated optical mode steering components are examples only; other types of optical mode steering components may be used in other embodiments of the invention.

Structure 400 comprises electrical contacts 402 to control the spatial position or direction of a propagation of an optical mode for light 404 at a free region of a selective optical component to control its wavelength response in the presence of a temperature change. Structure 400 may be controlled based on data received from a temperature sensor included or near the selective optical device; the structure is not actively controlling the spatial position or direction of propagation of the optical mode unless the temperature sensor indicates that a wavelength shift may occur. Thus, embodiments of the invention may describe structures controlled by a feedback loop that senses a local temperature near a selective optical component for controlling (e.g., by heat or injected current) one or more sections of the additional structure in order to compensate for the inherent temperature dependent wavelength shift of the selective optical component.

Structure 410 comprises a multiple stage interferometer formed from multiple MZIs 411 and 412 to control the spatial position or direction of a propagation of an optical mode for light 414 at a free region of a selective optical component, and thereby controlling the wavelength response of the selective optical component in the presence of a temperature change. The use of multiple stages allows for greater control of the movement of the spatial position or direction of propagation of the optical mode. Embodiments of the invention may comprise any number or combination of symmetrical or asymmetrical MZIs

Structure 420 comprises MZI 421 to receive light 424, and further includes directional coupler 425 at the point where interferometer arms 422 and 423 recombine. In this embodiment, the phase shifts of the interferometer arms are controlled to change the distribution of output light in the two directional coupler arms, thereby spatially moving the optical mode of the light.

Structure 430 comprises a multi-mode interferometer (MMI) including, in this example, input branch 431 to receive light 434 and input branch 432 (not used. The spatial position or direction of a propagation of the light is controlled by the phase adjustment of MMI 430.

Structure 440 comprises arrayed waveguides 441, heater 442 and output 443 having output spots 445 and 446 (described below). In this embodiment, arrayed waveguides 441 have the same propagation lengths. Heater 442 is placed on the array to move the output of structure 440 to one of output spots 445 and 446, which are to be coupled to a free propagation region of a selective optical device to move a spatial position or a direction of a propagation of an optical mode. For example, output spot 445 may comprise the position of the output of structure 440 when no heat is applied to arrayed waveguides 441 via heater 442, and output spot 446 may comprise the output of structure 440 when a specific heat value is applied to arrayed waveguides 441 via heater 442. Other embodiments may include more possible output spots. The heat applied to heater 442 may be controlled by a feedback loop that senses a local temperature near a selective optical component for controlling the spatial location of the output of structure 440 in order to compensate for the inherent temperature dependent wavelength shift of the selective optical component. Additionally if the output plane of the device (where spots 445 and 446 are shown) is not an imaging plane with a focused spot, then by applying heat to heater 442 the angle of the phase front of light crossing the output plane can be altered.

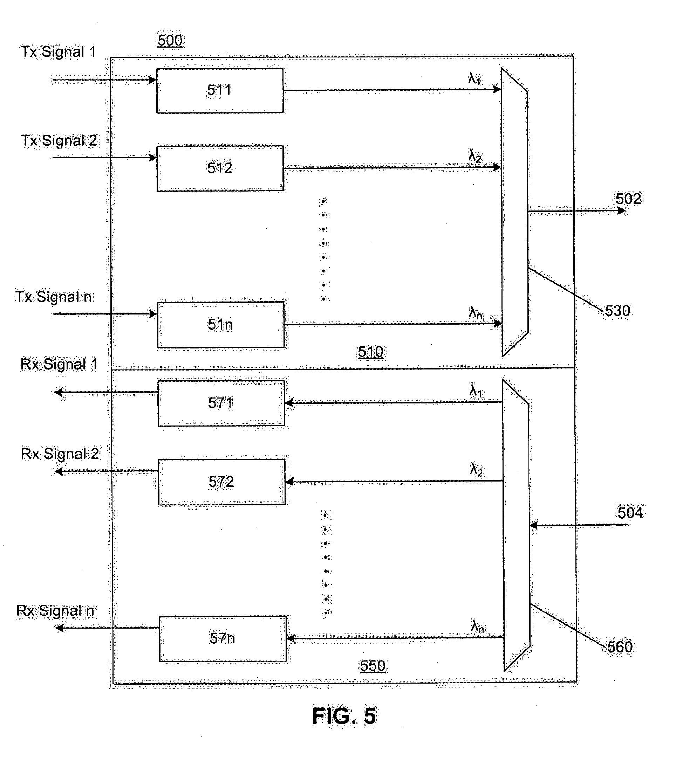

**FIG. 5** illustrates a tunable multi-wavelength optical transceiver including selective optical components having wavelength stabilization according to an embodiment of the invention. In this embodiment, transceiver 500 includes transmitter module 510 for generating output WDM signal 502 having n different WDM wavelengths. These different WDM wavelengths may be based, for example, on, the L, C and S bands for WDM applications. Transmitter module 500 includes tunable laser modules 511-51n to generate light, which may be further modulated based on transmission signal data. Said laser modules and modulators may be integrated or discrete components (not shown). Multiplexer 530 is shown to receive n modulated signals and outputs WDM output signal 502 that comprises multiple output channels within a WDM spectral band.

Transceiver 500 further includes receiver module 550 including de-multiplexer 560 to receive WDM input signal 504 and output the received signal at different WDM wavelengths along n different optical paths. It is to be understood that in other embodiments, transmitter module 510 and receiver module 550 may be included in separate devices (i.e., a separate transmitter and receiver). In this embodiment, optical detectors 571-57n are included in the n optical paths and convert the de-multiplexed signals of WDM input signal 504 into n reception data signals for further processing.

In this embodiment, multiplexer 530 and de-multiplexer 560 may comprise any of the semiconductor based optical de-muxing and muxing devices described above which have a wavelength shift of their transmission spectrum (i.e., transmitted power versus wavelength or optical frequency) that occurs with temperature change, thereby ensuring that transceiver 500 is operational over a wide temperature range.

Reference throughout the foregoing specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout the specification are not necessarily all referring to the same embodiment. Furthermore, the particular features, structures or characteristics may be combined in any suitable manner in one or more embodiments. In addition, it is appreciated that the figures provided are for explanation purposes to persons ordinarily skilled in the art and that the drawings are not necessarily drawn to scale. It is to be understood that the various regions, layers and structures of figures may vary in size and dimensions.

The above described embodiments of the invention may comprise SOI or silicon based (e.g., silicon nitride (SiN)) devices, or may comprise devices formed from both silicon and a non-silicon material. Said non-silicon material (alternatively referred to as "heterogeneous material") may comprise one of III-V material, magneto-optic material, or crystal substrate material.

III-V semiconductors have elements that are found in group III and group V of the periodic table (e.g., Indium Gallium Arsenide Phosphide (InGaAsP), Gallium Indium Arsenide Nitride (GaInAsN)). The carrier dispersion effects of III-V based materials may be significantly higher than in silicon based materials, as electron speed in III-V semiconductors is much faster than that in silicon. In addition, III-V materials have a direct bandgap which enables efficient creation of light from electrical pumping. Thus, III-V semiconductor materials enable photonic operations with an increased efficiency over silicon for both generating light and modulating the refractive index of light.

Thus, III-V semiconductor materials enable photonic operation with an increased efficiency at generating light from electricity and converting light back into electricity. The low optical loss and high quality oxides of silicon are thus combined with the electro-optic efficiency of III-V semiconductors in the heterogeneous optical devices described below; in embodiments of the invention, said heterogeneous devices utilize low loss heterogeneous optical waveguide transitions between the devices' heterogeneous and silicon-only waveguides.

Magneto-optic materials allow heterogeneous PICs to operate based on the magneto-optic (MO) effect. Such devices may utilize the Faraday Effect, in which the magnetic field associated with an electrical signal modulates an optical beam, offering high bandwidth modulation, and rotates the electric field of the optical mode enabling optical isolators. Said magneto-optic materials may comprise, for example, materials such as such as iron, cobalt, or yttrium iron garnet (YIG).

Crystal substrate materials provide heterogeneous PICs with a high electromechanical coupling, linear electro optic coefficient, low transmission loss, and stable physical and chemical properties. Said crystal substrate materials may comprise, for example, lithium niobate (LiNbO3) or lithium tantalate (LiTaO3).

Embodiments of the invention thus describe a device comprising a selective optical component comprising at least one of a multiplexer or de-multiplexer and including a first port, a second set of a plurality of ports, a shared medium for the first port and the second set of ports to exchange light, and a free propagation region at the first port or the second set of ports. Embodiments of the invention further describe an additional waveguide structure coupled to the free propagation region of the selective optical component to move a spatial position or a direction of a propagation of an optical mode at the free propagation region for adjusting a wavelength response of the selective optical component.

In some embodiments, the additional waveguide structure that moves the spatial position or the direction of propagation of the optical mode at the free propagation region of the selective optical component comprises an electrical contact to control the spatial position or direction of propagation of the optical mode.

In some embodiments, the additional waveguide structure to move the spatial position or direction of propagation of the optical mode at the free propagation region of the selective optical component comprises a plurality of separate waveguides. In some of these embodiments, the additional waveguide structure comprises a directional coupler. In some of these embodiments, the additional waveguide structure comprises an interferometer and the plurality of separate waveguides comprises at least two interfering waveguides of the interferometer; for example, said interferometer may comprise a Mach Zehnder interferometer, or a multiple stage interferometer formed from multiple Mach Zehnder interferometers.

In some embodiments, the additional waveguide structure to move the spatial position or direction of propagation of the optical mode at the free propagation region of the selective optical component comprises a multi-mode interferometer.

In some embodiments, the wavelength response of the selective optical component is adjusted to compensate for an inherent temperature dependent wavelength shift of the selective optical component, and the device further comprises a temperature sensing element to measure an operating temperature of the device. In some of these embodiments, the additional waveguide structure is controlled by a feedback loop based, at least in part, on the operating temperature of the device to control one or more sections of the additional structure for automatically compensating for the inherent temperature dependent wavelength shift of the selective optical component. In some embodiments, the additional waveguide structure includes the temperature sensing element, or the selective optical component includes the temperature sensing element.

In some embodiments, the additional waveguide structure that moves the spatial position or the direction of propagation of the optical mode at the free propagation region of the selective optical component comprises a plurality of arrayed waveguides, an output coupled to the free propagation region of the selective optical component, and a heater disposed on the arrayed waveguides to change the location of an output spot of the arrayed waveguides or the angle of the phase front of light exiting the arrayed waveguides.

In some embodiments, the wavelength response of the selective optical component is adjusted to compensate for a wavelength mis-targeting of the selective optical component. In some embodiments, the first port of the selective optical component comprises multiple ports for different polarizations or different sets of wavelengths. In some of these embodiments, a ratio of a group index for the waveguides of the second set of ports and an effective index in the free propagation region is substantially equal so that the device comprises a same channel spacing for different polarizations.

Embodiments of the invention describe a wavelength division multiplexed (WDM) device comprising at least one of: a transmission component comprising an array of laser modules to produce light having different optical WDM wavelengths onto a plurality of optical paths, and a multiplexer having a plurality of inputs to receive light from each of the plurality of optical paths and to output an output WDM signal comprising the different optical WDM wavelengths; or a receiving component comprising a de-multiplexer to receive an input WDM signal comprising the different optical WDM wavelengths and to output each of the different WDM wavelengths on a separate optical path. The multiplexer of the transmission component and the de-multiplexer of the receiving component each comprises a selective optical component including, a first port, a second set of a plurality of ports, a shared medium for the first port and the second set of ports to exchange light, and a free propagation region at the first port or the second set of ports, and an additional waveguide structure coupled to the free propagation region of the selective optical component to move a spatial position or a direction of a propagation of an optical mode at the free propagation region for adjusting a wavelength response of the selective optical component.

In some embodiments, the WDM device comprises a transceiver having both the transmission component and the receiving component. In some embodiments, the additional waveguide structure of the multiplexer of the transmission component and the de-multiplexer of the receiving component comprises a Mach Zehnder interferometer. In some of these embodiments, the additional waveguide structure of the multiplexer of the transmission component and the de-multiplexer of the receiving component comprises a multiple stage interferometer formed from multiple Mach Zehnder interferometers.

In some embodiments, the additional waveguide structure of the multiplexer of the transmission component and the de-multiplexer of the receiving component comprises a multi-mode interferometer. In some embodiments, the additional waveguide structure of the multiplexer of the transmission component and the de-multiplexer of the receiving component comprises a directional coupler. In some embodiments, the wavelength responses of the selective optical component of the multiplexer of the transmission component and the de-multiplexer of the receiving component are adjusted to compensate for an inherent temperature dependent wavelength shift of the selective optical component.

In the foregoing detailed description, the method and apparatus of the present invention have been described with reference to specific exemplary embodiments thereof. It will, however, be evident that various modifications and changes may be made thereto without departing from the broader spirit and scope of the present invention. The present specification and figures are accordingly to be regarded as illustrative rather than restrictive.

## Claims

1. A device comprising:
a selective optical component comprising at least one of a multiplexer or de-multiplexer and including:
a first port;
a second set of a plurality of ports;
a shared medium for the first port and the second set of ports to exchange light;
and
a free propagation region at the first port or the second set of ports; and
an additional waveguide structure coupled to the free propagation region of the selective optical component to move a spatial position or a direction of a propagation of an optical mode at the free propagation region for adjusting a wavelength response of the selective optical component.

2. The device of claim 1, wherein the additional waveguide structure that moves the spatial position or the direction of propagation of the optical mode at the free propagation region of the selective optical component comprises:
an electrical contact to control the spatial position or direction of propagation of the optical mode.

3. The device of claim 1, wherein the additional waveguide structure to move the spatial position or direction of propagation of the optical mode at the free propagation region of the selective optical component comprises a plurality of separate waveguides.

4. The device of claim 3, wherein the additional waveguide structure comprises an interferometer and the plurality of separate waveguides comprises at least two interfering waveguides of the interferometer.

5. The device of claim 4, wherein the interferometer comprises a Mach Zehnder interferometer, or comprises a multiple stage interferometer formed from multiple Mach Zehnder interferometers.

6. The device of claim 3, wherein the additional waveguide structure comprises a directional coupler.

7. The device of claim 1, wherein the additional waveguide structure to move the spatial position or direction of propagation of the optical mode at the free propagation region of the selective optical component comprises a multi-mode interferometer.

8. The device of claim 1, wherein the wavelength response of the selective optical component is adjusted to compensate for an inherent temperature dependent wavelength shift of the selective optical component, and the device further comprises:
a temperature sensing element to measure an operating temperature of the device.

9. The device of claim 8, wherein the additional waveguide structure is controlled by a feedback loop based, at least in part, on the operating temperature of the device to control one or more sections of the additional structure for automatically compensating for the inherent temperature dependent wavelength shift of the selective optical component.

10. The device of claim 8, wherein either the additional waveguide structure includes the temperature sensing element, or the selective optical component includes the temperature sensing element.

11. The device of claim 1, wherein the additional waveguide structure that moves the spatial position or the direction of propagation of the optical mode at the free propagation region of the selective optical component comprises:
a plurality of arrayed waveguides;
an output coupled to the free propagation region of the selective optical component; and
a heater disposed on the arrayed waveguides to change the location of an output spot of the arrayed waveguides or the angle of the phase front of light exiting the arrayed waveguides.

12. The device of claim 1, wherein the wavelength response of the selective optical component is adjusted to compensate for a wavelength mis-targeting of the selective optical component.

13. The device of claim 1, wherein the first port of the selective optical component comprises multiple ports for different polarizations or different sets of wavelengths.

14. The device of claim 13, wherein a ratio of a group index for the waveguides of the second set of ports and an effective index in the free propagation region is substantially equal so that the device comprises a same channel spacing for different polarizations.

15. A wavelength division multiplexed (WDM) device comprising:
at least one of:
a transmission component comprising:
an array of laser modules to produce light having different optical WDM wavelengths onto a plurality of optical paths; and
a multiplexer having a plurality of inputs to receive light from each of the plurality of optical paths and to output an output WDM signal comprising the different optical WDM wavelengths; or
a receiving component comprising a de-multiplexer to receive an input WDM signal comprising the different optical WDM wavelengths and to output each of the different WDM wavelengths on a separate optical path;
wherein the multiplexer of the transmission component and the de-multiplexer of the receiving component each comprises any of the devices of claims 1-14.
